# EUROPEAN PATENT APPLICATION

(11) **EP 3 431 397 A1**
(43) Date of publication of application: **23.01.2019**
(21) Application number: 18182741.1
(22) Date of filing: 10.07.2018
(51) Int. Cl.: B64F 1/00, G08G 5/06

(54) **METHOD AND SYSTEM FOR RENDERING AND DISPLAYING A PERSPECTIVE VIEW OF AIRCRAFT TAXI OPERATION**

(30) Priority: 18.07.2017 US 201715653205
(71) Applicant: Rosemount Aerospace Inc., Burnsville, MN 55306-4898 (US)
(72) Inventor: VERONESI, William A., Hartford, CT 06114 (US); GINSBERG, David, Granby, CT 06035 (US); RYDE, Julian, Alameda, CA 94501 (US); PESIK, Joseph, Eagan, MN 55123 (US)
(74) Representative: Dehns

(57) **Abstract**

Apparatus and associated methods relate to displaying an image of a taxiing aircraft in relation to objects in a surrounding environment. A first data set indicative of locations, relative to the taxiing aircraft, of objects external to the taxiing aircraft is collected. Then, image data of a map of an area external to and including the taxiing aircraft is formed. Symbols of the objects external to the aircraft at the locations, relative to the taxiing aircraft, indicated by the first data set are mapping into the image data. The image data is then sent to a display device for displaying the image data to a pilot of the taxiing aircraft. Displaying a map indicating the relative location of external objects with which the taxiing aircraft could potentially collide advantageously assists the pilot in taxi operation.

## Description

### BACKGROUND

Each year, significant time and money are lost due to commercial aircraft accidents and incidents during ground operations, of which significant portions occur during taxiing maneuvers. Many aircraft have large wingspans, for example, which can make it difficult for a pilot to anticipate potential collisions with the wingtips. During ground operations, aircraft share the taxiways with other aircraft, fuel vehicles, baggage carrying trains, mobile stairways and many other objects. Aircrafts often taxi to and/or from fixed buildings and other fixed objects. Should an aircraft collide with any of these objects, the aircraft must be repaired and recertified as capable of operation. The cost of repair and recertification, as well as the lost opportunity costs associated with the aircraft being unavailable for use can be very expensive.

Pilots are located in a central cockpit where they are well positioned to observe objects that are directly in front of the cabin of the aircraft. Wings extend laterally from the cabin in both directions. Some commercial and some military aircraft have large wingspans, and so the wings on these aircraft laterally extend a great distance from the cabin and are thus positioned behind and out of the field of view of the cabin. Some commercial and some military planes have engines that hang below the wings of the aircraft. Pilots, positioned in the cabin, can have difficulty knowing the risk of collisions between the wingtips and/or engines and other objects external to the aircraft. A method or system for rendering and displaying a perspective view of the aircraft and surrounding structures from a vantage point outside of aircraft would assist a pilot in avoiding objects external to the aircraft.

### SUMMARY

Apparatus and associated methods relate to a method for displaying an image of a taxiing aircraft in relation to objects in a surrounding environment. The method includes collecting a first data set indicative of a location and orientation of the taxiing aircraft. Then, a second data set indicative of locations, relative to the taxiing aircraft, of objects external to the taxiing aircraft is collected. The method continues by forming image data of an area external to and including the taxiing aircraft. A symbol of the taxiing aircraft is mapped into the image data at the location and orientation indicated by the first data set.. Symbols of the objects external to the taxiing aircraft are mapped into the image data at the locations indicated by the second data set. Then, the image data is sent to a display device for displaying the image data to a pilot of the taxiing aircraft.

Some embodiments relate to a system for displaying an image of a taxiing aircraft in relation to objects in a surrounding environment. The system includes one or more processors and one or more storage devices encoded with instructions that, when executed by the one or more processors, cause the system to collect a first data set indicative of a location and orientation of the taxiing aircraft. Then, the system retrieves a second data set indicative of locations of objects external to the taxiing aircraft. The system then forms image data of an area external to and including the taxiing aircraft. The system maps into the image data a symbol of the taxiing aircraft at the location and orientation indicated by the first data set. The system maps into the image data locations, relative to the taxiing aircraft, symbols of the objects external to the taxiing aircraft at the locations indicated by the second data set. Then, the system sends the image data to a display device for displaying the image data to a pilot of the taxiing aircraft.

### BRIEF DESCRIPTION OF THE DRAWINGS

FIGS. 1A-1B are perspective and cockpit views, respectively, of objects in the surrounding environment of a taxiing aircraft.
FIGS. 2A-2B are a plan view and a corresponding display view of image data of a taxiing aircraft within an airport environment.
FIGS. 3A-3B are display views of image data of a taxiing aircraft within an airport environment with collision course objects annotated.
FIGS. 4A-4B are display views of image data of a taxiing aircraft within an airport environment with safe and/or unsafe trajectories identified.
FIG. 5 is a display view of image data of a taxiing aircraft within an airport environment with a safe route identified.
FIG. 6 is block diagram of an embodiment of a system for rendering and displaying a perspective view of aircraft taxi operation.

### DETAILED DESCRIPTION

Apparatus and associated methods relate to displaying an image of a taxiing aircraft in relation to objects in a surrounding environment. A first data set indicative of locations, relative to the taxiing aircraft, of objects external to the taxiing aircraft is collected. Then, image data of a map of an area external to and including the taxiing aircraft is formed. Symbols of the objects external to the aircraft at the locations, relative to the taxiing aircraft, indicated by the first data set are mapping into the image data. The image data is then sent to a display device for displaying the image data to a pilot of the taxiing aircraft. Displaying a map indicating the relative location of external objects with which the taxiing aircraft could potentially collide advantageously assists the pilot in taxi operation. In some embodiments, objects within a trajectory of the taxiing aircraft are flagged in the image data. Other static structures, which could be displayed, include light poles, building structures, concrete barriers, etc. Dynamic structures, which could be displayed, include ground vehicles and other aircraft. Such dynamic objects can be moving or temporarily stopped, for example.

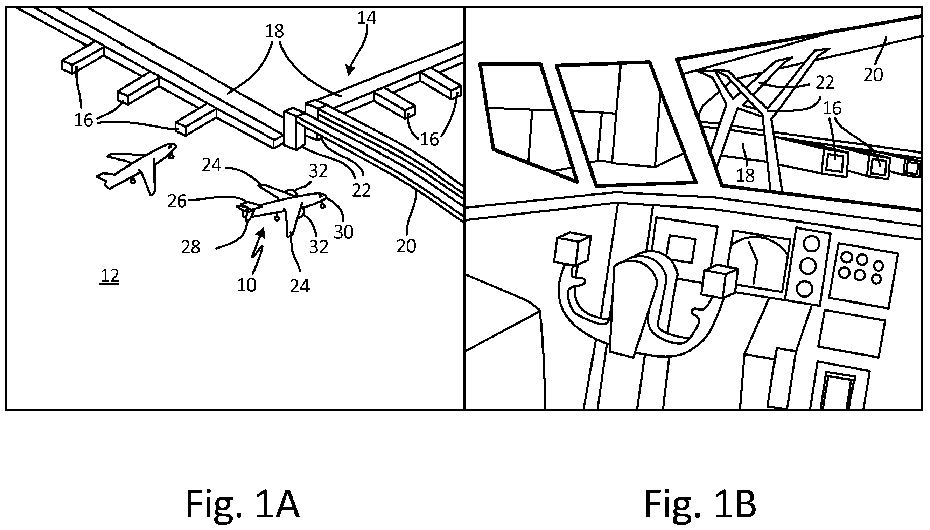

FIGS. 1A-1B are perspective and cockpit views, respectively, of objects in the surrounding environment of a taxiing aircraft. In FIG. 1A, taxiing aircraft 10 is navigating tarmac 12 of airport environment 14. Airport environment 14 includes various permanently fixed structures and dynamic objects that potentially could be impacted by taxiing aircraft 10. These permanently fixed structures include, for example, gates 16, concourses 18, and bridge structure 20 supported by piers 22. Taxiing aircraft 10 has various structures located at various extremities of taxiing aircraft 10. Such extremity structures include wingtips 24, vertical stabilizer 26, horizontal stabilizer 28, nose 30 and engine nacelles 32. These extremity structures approximately define the spatial extent of aircraft 10 and can be at risk of collision with objects external to taxiing aircraft 10.

In FIG. 1B, the objects that could potentially be impacted by taxiing aircraft 10, which are depicted in FIG. 1A, are shown from the viewpoint of a pilot seated in the cockpit of taxiing aircraft 10. Gates 16, concourses 18, and bridge structure 20 supported by piers 22 can all be seen from the cockpit perspective. Wingtips 24, vertical stabilizer 26, horizontal stabilizer 28, nose 30 and engine nacelles 32 (shown in FIG. 1A) are not visible from the cockpit perspective shown in FIG. 1B. Because these extremity structures cannot be seen by the pilot, it can be difficult for a pilot to gauge whether these extremity structures are on a collision trajectory with one or more of the visible objects.

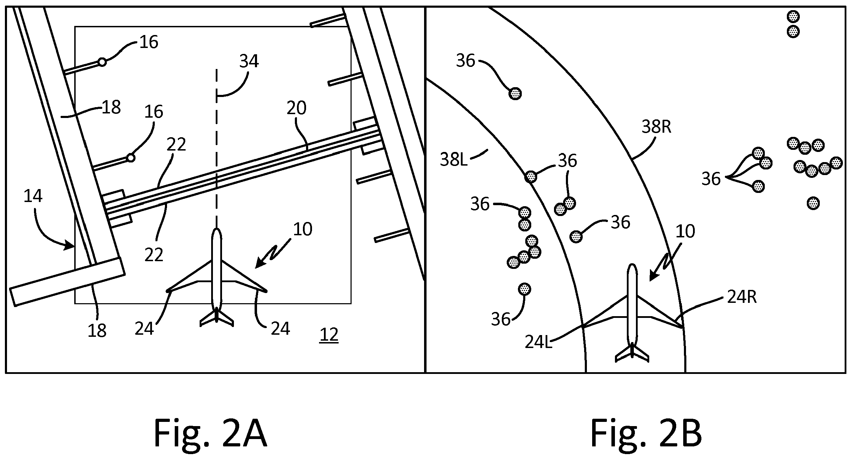

FIGS. 2A-2B are a plan view and a corresponding display view of image data of a taxiing aircraft within an airport environment. In FIG. 2A, aircraft 10 and the aircraft environment 14 depicted in FIGS. 1A-1B are shown in a plan view perspective. Taxiing aircraft 10 is navigating tarmac 12 just before passing under bridge structure 20. No projected trajectory is depicted in this figure. If, however, a route is projected in a straight line along longitudinal axis 34 of taxiing aircraft, the objects 16, 18, 20 and 22 of aircraft environment 14 can be evaluated as to each one's risk of collision. In some embodiments disclosed herebelow, such an evaluation of risk of collision is made for objects of an aircraft environment.

In FIG. 2B, a display image corresponding to the plan view image of FIG. 2A is depicted. In this figure, collidable objects 36 are displayed at locations relative to the location and orientation of aircraft 10. Collidable objects 36 can be determined, for example, as objects that are located below a predetermined maximum vertical altitude above a ground level altitude. In some embodiments, objects that a located below a predetermined minimum vertical altitude can be considered ground clutter, and excluded. Such a predetermined maximum vertical altitude can correspond to a maximum vertical height of the extremity structure that is highest on taxiing aircraft 10. Projected trajectory lines 38L and 38R are also mapped into the display image. In the depicted embodiment, projected trajectory lines 38L and 38R are shown as lines indicative of projected trajectories of each of wingtips 24L and 24R, respectively. Projected trajectory lines 38L and 38R are curved so as to indicate a left-turning nose gear orientation of taxiing aircraft 10. In some embodiments, the nose gear orientation and/or other aircraft avionics data can be used to calculate projected trajectory lines 38L and 38R.

In some embodiments, the location and/or orientation of taxiing aircraft 10 is collected from an aircraft avionics system. For example, the aircraft avionics system can include a compass, an accelerometer, and/or a Global Positioning System (GPS). An image data rendering system can receive, from the aircraft avionics system, a data set indicative of a location and orientation of taxiing aircraft 10. Then the image data rendering system can retrieve a second data set indicative of locations of objects located within a predetermined distance of the location of taxiing aircraft 10. This second data set can be retrieved, for example, from a fixed-object database corresponding to the particular airport at which taxiing aircraft 10 is taxiing. In some embodiments, such a database can be stored in local memory of the image data rendering system. In some embodiments, the second data set can be retrieved from an object detector affixed to taxiing aircraft 10.

Various types of object detectors can be used for obtaining location and/or range information of static and/or dynamic objects external to taxiing aircraft 10. For example, any of radar systems, lidar systems, and structured light systems can be used to determine range and/or location of structures external to taxiing aircraft 10.

The image data rendering system can then form image data of an area external to and including taxiing aircraft 10. The image data rendering system can then map into the image data symbols of the objects located within a predetermined distance from the location of taxiing aircraft 10, at locations, relative to taxiing aircraft 10, as indicated by the first and second data sets. The image data rendering system locates and orients the objects with respect to taxiing aircrafts' orientation and location. The image data rendering system can form image data of the model of the fixed structures. The image data rendering system can then map into the image data a model of taxiing aircraft 10 at the location and orientation indicated by the first data set or at a standard location within the image data. Conversely, the image rendering system can orient the area external to and including taxiing aircraft 10 such that taxiing aircraft 10 is displayed at a standard location within the display image. This image data is then sent to a display device for displaying the image data to a pilot of the taxiing aircraft, as shown in the exemplary display image depicted in FIG. 2B.

In some embodiments, the image data rendering system collects Automatic Dependent Surveillance Broadcast (ADS-B) data from ADS-B equipped objects, the ADS-B data being indicative of locations of the ADS-B equipped objects. The image data rendering system can then map into the image data a model of the ADS-B equipped objects at the locations indicated by the collected ADS-B data. In this way, ADS-B equipped dynamic objects, as well as ADS-B static objects, can be depicted in the display image at locations indicated by the ADS-B data. In some embodiments, locations of objects can be retrieved from an object detection system mounted on taxiing aircraft 10.

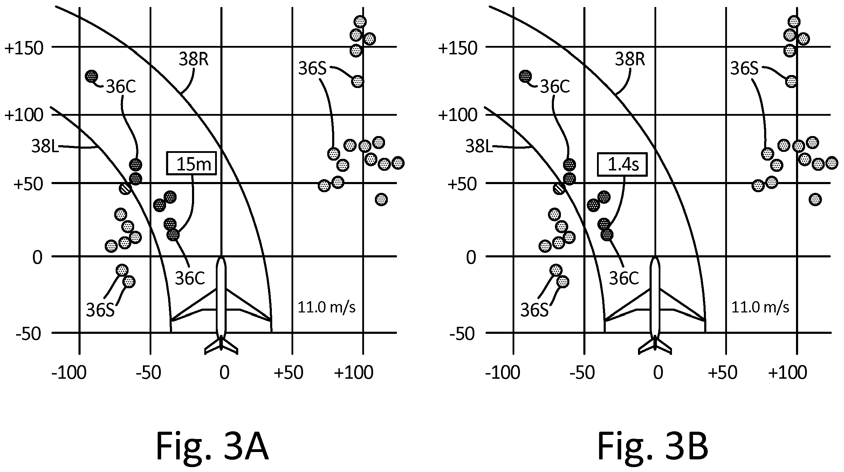

FIGS. 3A-3B are display views of image data of a taxiing aircraft within an airport environment with collision course objects annotated. In FIGS. 3A-3B, the display image shown in FIG. 2B is shown with collidable objects 36C and 36S variously annotated. Also depicted in FIGS. 3A-3B is a grid having horizontal and vertical grid lines. The horizontal and vertical grid lines are indicative of distance. Such grid lines can facilitate a pilot in determining distances to objects external to the aircraft. In FIGS. 3A-3B, collidable objects 36C that are located between trajectory lines 38L and 38 R are distinguished from collidable objects 36S that are located outside of trajectory lines 38L and 38R. Collidable objects 36C that reside between the trajectory lines 38L and 38R are depicted as flagged and/or annotated. In some embodiments, collidable objects 36C that reside between the trajectory lines 38L and 38R are shown in a different color or size than objects 36S that reside outside projected trajectory lines 38L and 38R so as to indicate a risk of collision to collidable objects 36C and/or that collidable objects 36S are safe or not at risk of collision.

Various embodiments can annotate collidable objects 36C and/or 36S in other ways. For example, In FIG. 3A, the nearest of collidable objects 36C is annotated as to its distance from taxiing aircraft 10. The collidable object 36C annotated in this figure is an object on a collision path of taxiing aircraft 10. In the depicted embodiment, the annotated distance is measured from the origin of the coordinate system, which is commensurate with the nose of the taxiing aircraft. In other embodiments, the annotated distance can be measured from a coordinate origin corresponding to a location of an aircraft feature that is on a collision path of collidable object 36C. In some embodiments, other collidable objects can also be annotated. In FIG. 3B, the nearest collidable object 36C is annotated as to time until collision. Such an estimated time to collision can be based on aircraft avionics data, such as, for example, taxiing speed, which can be annotated in some embodiments. In some embodiments, an audible alarm may be activated if any of the collidable objects 36C have a range from taxiing aircraft 10 that is less than a predetermined threshold (e.g., less than a predetermined time to collision and/or less than a predetermined spatial distance).

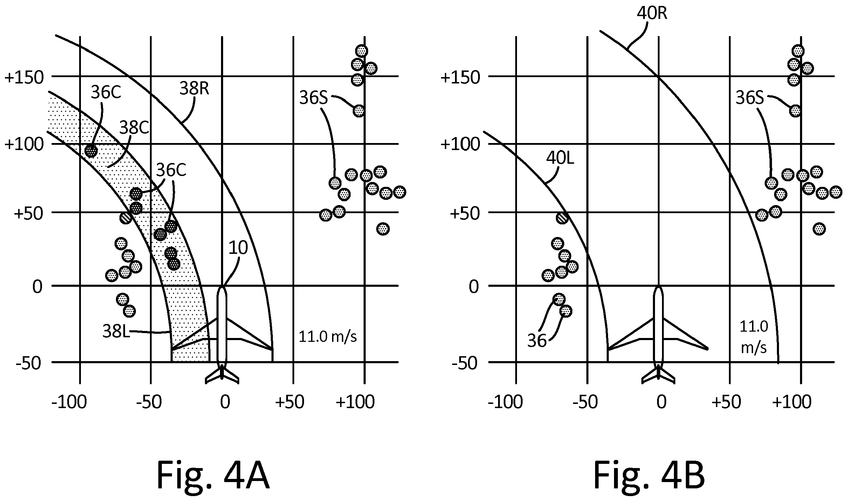

FIGS. 4A-4B are display views of image data of a taxiing aircraft within an airport environment with safe and/or unsafe trajectories identified. In FIG. 4A, an embodiment of a taxiing display image is shown where a collision portion 38C of the area between projected trajectory lines 38L and 38R is flagged. The collision portion 38C of the area between projected trajectory lines 38L and 38R corresponds to a left-side wing portion of taxiing aircraft 10 that is on a collision path with collidable objects 36C. Indicated collision portion 38C can assist a pilot to determine a new trajectory (e.g., in this case, to indicate that the pilot must make a right-hand turn correction to the current trajectory).

In FIG. 4B, the display view is of a different taxiing scenario than those displayed in FIGS. 2B-4A. In FIG. 4B, none of collidable objects 36 are within a current trajectory of aircraft 10. In this embodiment, trajectory boundaries 40L and 40R are mapped onto the display image. The trajectory boundaries 40L and 40R are calculated based on the projected trajectory of taxiing aircraft 10. In the depicted embodiment, the trajectory boundaries are calculated using a left-hand turning nose gear orientation. The trajectory boundaries 40L and 40R can assist a pilot in determining a left-right relative positioning of taxiing aircraft 10 within the trajectory boundaries 40L and 40R. In some embodiments a centerline can be mapped onto the display image. The mapped centerline can be located halfway between trajectory boundaries 40L and 40R, for example.

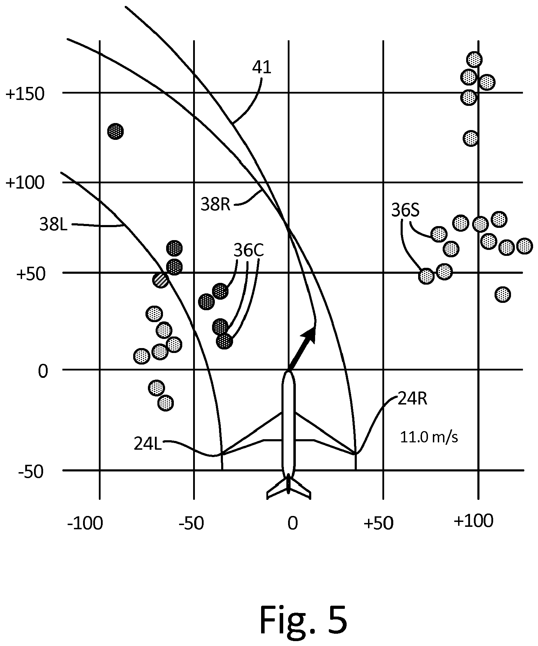

FIG. 5 is a display view of image data of a taxiing aircraft within an airport environment with a safe route identified. In FIG. 5, the display image depicts projected trajectory lines 38L and 38R corresponding to projected trajectories of each of wingtips 24L and 24R. Superimposed on the display image is safe route 41. Safe route 41 is calculated to avoid all of collidable objects 36C and 36S. Safe route 41 can be calculated based on a retrieved destination location for taxiing aircraft 10, for example. In some embodiments, a lateral buffer distance can be used in calculating safe route 41. The lateral buffer distance can be a predetermined lateral distance, below which a distance between wingtip 24 and collidable object 36 is considered to be at risk of collision.

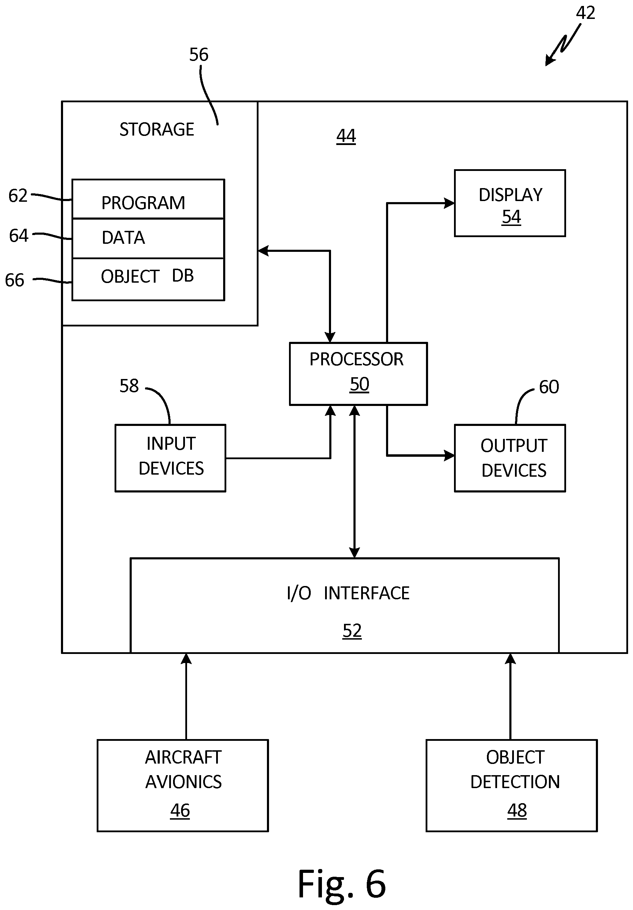

FIG. 6 is block diagram of an embodiment of a system for rendering and displaying a perspective view of aircraft taxi operation. In FIG. 6, taxi display system 42 includes image data rendering system 44, aircraft avionics 46 and object detection system 48. Image data rendering system 44 includes processor(s) 50, input/output interface 52, display device 54, storage device(s) 56, user input devices 58, and user output devices 60. Storage device(s) 56 has various storage or memory locations. Storage device(s) 56 includes program memory 62, data memory 64, and fixed-object database 66. In some embodiments, the object database can include dynamic objects. Image data rendering system 44 is in communication with aircraft avionics 46 and object detection system 48 via input/output interface 52. Aircraft avionics 46 can provide image data rendering system 44 with metrics indicative of a taxiing aircrafts location, orientation, speed, etc. Object detection system 48 can provide image data rendering system 44 with range, location, orientation and/or velocity data for objects external to the taxiing aircraft. Object detection system 48 can provide, for example, such data for dynamic objects such as other aircraft, aircraft towing vehicles, baggage carts, fuel vehicles, etc.

As illustrated in FIG. 6, image data rendering system 44 includes processor(s) 50, input/output interface 52, display device 54, storage device(s) 56, user input devices 58, and user output devices 60. However, in certain examples, image data rendering system 44 can include more or fewer components. For instance, in examples where image data rendering system 44 is an avionics unit, image data rendering system 44 may not include user input devices 58 and/or user output devices 60. In some examples, such as where image data rendering system 44 is a mobile or portable device such as a laptop computer, image data rendering system 44 may include additional components such as a battery that provides power to components of image data rendering system 44 during operation.

Processor(s) 50, in one example, is configured to implement functionality and/or process instructions for execution within image data rendering system 44. For instance, processor(s) 50 can be capable of processing instructions stored in storage device(s) 56. Examples of processor(s) 50 can include any one or more of a microprocessor, a controller, a digital signal processor (DSP), an application specific integrated circuit (ASIC), a field-programmable gate array (FPGA), or other equivalent discrete or integrated logic circuitry.

Input/output interface 52, in some examples, includes a communications module. Input/output interface 52, in one example, utilizes the communications module to communicate with external devices via one or more networks, such as one or more wireless or wired networks or both. The communications module can be a network interface card, such as an Ethernet card, an optical transceiver, a radio frequency transceiver, or any other type of device that can send and receive information. The communications module can be a network interface card, such as an Ethernet card, an optical transceiver, a radio frequency transceiver, or any other type of device that can send and receive information. Other examples of such network interfaces can include Bluetooth, 3G, 4G, and Wi-Fi radio computing devices as well as Universal Serial Bus (USB). In some embodiments, communication with the aircraft can be performed via a communications bus, such as, for example, an Aeronautical Radio, Incorporated (ARINC) standard communications protocol. In an exemplary embodiment, aircraft communication with the aircraft can be performed via a communications bus, such as, for example, a Controller Area Network (CAN) bus.

Display device 54 can be used to communicate information between image data rendering system 44 and a pilot of the taxiing aircraft. In some embodiments display device 54 can include a visual display and/or an audible system. The audible system can include a horn and or a speaker. The visual display can use any of CRT, LCD, Plasma, and/or OLED technologies, for example, including an Electronic Flight Bag (EFB) or Primary Flight Display (PFD).

Storage device(s) 56 can be configured to store information within image data rendering system 44 during operation. Storage device(s) 56, in some examples, is described as computer-readable storage media. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). In some examples, storage device(s) 56 is a temporary memory, meaning that a primary purpose of storage device(s) 56 is not long-term storage. Storage device(s) 56, in some examples, is described as volatile memory, meaning that storage device(s) 56 do not maintain stored contents when power to image data rendering system 44 is turned off. Examples of volatile memories can include random access memories (RAM), dynamic random access memories (DRAM), static random access memories (SRAM), and other forms of volatile memories. In some examples, storage device(s) 56 is used to store program instructions for execution by processor(s) 50. Storage device(s) 56, in one example, is used by software or applications running on image data rendering system 44 (e.g., a software program implementing long-range cloud conditions detection) to temporarily store information during program execution.

Storage device(s) 56, in some examples, also include one or more computer-readable storage media. Storage device(s) 56 can be configured to store larger amounts of information than volatile memory. Storage device(s) 56 can further be configured for long-term storage of information. In some examples, storage device(s) 56 include non-volatile storage elements. Examples of such non-volatile storage elements can include magnetic hard discs, optical discs, flash memories, or forms of electrically programmable memories (EPROM) or electrically erasable and programmable (EEPROM) memories.

User input devices 58, in some examples, are configured to receive input from a user. Examples of user input devices 58 can include a mouse, a keyboard, a microphone, a camera device, a presence-sensitive and/or touch-sensitive display, push buttons, arrow keys, or other type of device configured to receive input from a user. In some embodiments, input communication from the user can be performed via a communications bus, such as, for example, an Aeronautical Radio, Incorporated (ARINC) standard communications protocol. In an exemplary embodiment, user input communication from the user can be performed via a communications bus, such as, for example, a Controller Area Network (CAN) bus.

User output devices 60 can be configured to provide output to a user. Examples of user output devices 60 can include a display device, a sound card, a video graphics card, a speaker, a cathode ray tube (CRT) monitor, a liquid crystal display (LCD), a light emitting diode (LED) display, an organic light emitting diode (OLED) display, or other type of device for outputting information in a form understandable to users or machines. In some embodiments, output communication to the user can be performed via a communications bus, such as, for example, an Aeronautical Radio, Incorporated (ARINC) standard communications protocol. In an exemplary embodiment, output communication to the user can be performed via a communications bus, such as, for example, a Controller Area Network (CAN) bus.

In some embodiments, user output devices 60 can include a sound system, such as, for example, a speaker. In such embodiments, audible warnings and/or directions can be provided to a pilot. For example, in response to detecting objects in the path of the taxiing aircraft, commands and/or warnings such as "stop," "turn right," "turn left," and/or "slow" can be audibly provided to the pilot.

### Discussion of Possible Embodiments

The following are non-exclusive descriptions of possible embodiments of the present invention.

Apparatus and associated methods relate to a method displaying an image of a taxiing aircraft in relation to objects in a surrounding environment. The method includes collecting a first data set indicative of locations, relative to the taxiing aircraft, of objects external to the taxiing aircraft. The method includes forming image data of a map of an area external to and including the taxiing aircraft. The method includes mapping into the image data symbols of the objects external to the aircraft at the locations, relative to the taxiing aircraft, indicated by the first data set. The method also includes sending the image data to a display device for displaying the image data to a pilot of the taxiing aircraft.

The method of the preceding paragraph can optionally include, additionally and/or alternatively, any one or more of the following features, configurations and/or additional components:

A further embodiment of the foregoing method can further include collecting a second data set indicative of a location and orientation of the taxiing aircraft. The method also can include mapping into the image data a symbol of the taxiing aircraft at the location and orientation indicated by the second data set.

A further embodiment of any of the foregoing methods can further include collecting a third data set indicative of a velocity and/or steering orientation of the taxiing aircraft.

A further embodiment of any of the foregoing methods can further include calculating, based at least in part on the first and third data sets, a trajectory of the taxiing aircraft within the image data. The method also can include mapping into the image data a symbol indicative of the calculated trajectory of the taxiing aircraft.

A further embodiment of any of the foregoing methods can further include determining if the locations of the objects external to the taxiing aircraft are within the calculated trajectory of the taxiing aircraft.

A further embodiment of any of the foregoing methods can further include providing annotation of ranges of the objects external to the taxiing aircraft with respect to the location of the taxiing aircraft.

A further embodiment of any of the foregoing methods can further include providing annotation of time to collision with the objects external to the taxiing aircraft.

A further embodiment of any of the foregoing methods can further include collecting Automatic Dependent Surveillance Broadcast (ADS-B) data from ADS-B equipped objects external to the taxiing aircraft, the ADS-B data being indicative of locations of the ADS-B equipped objects external to the taxiing aircraft. The method also can include mapping into the image data symbols of the ADS-B equipped objects external to the taxiing aircraft at the locations indicated by the collected ADS-B data.

A further embodiment of any of the foregoing methods can further include retrieving a destination location for the taxiing aircraft. The method also can include calculating a route from the location of the taxiing aircraft as indicated by the second data set to the destination location of the taxiing aircraft, the calculated route avoiding collision with the objects external to the taxiing aircraft. The method also can include mapping into the image data at least a portion of the calculated route.

A further embodiment of any of the foregoing methods, wherein collecting the first data set indicative of the locations, relative to the taxiing aircraft, of objects external to the taxiing aircraft can include retrieving the first data set from an object detection system mounted to the taxiing aircraft.

Some embodiments relate to a system for displaying an image of a taxiing aircraft in relation to objects in a surrounding environment. The system includes one or more processors and one or more storage devices. The one or more storage devices are encoded with instructions that, when executed by the one or more processors, cause the system to perform the step of collecting a first data set indicative of locations, relative to the taxiing aircraft, of objects external to the taxiing aircraft. The one or more storage devices are encoded with instructions that, when executed by the one or more processors, cause the system to perform the step of forming image data of a map of an area external to and including the taxiing aircraft. The one or more storage devices are encoded with instructions that, when executed by the one or more processors, cause the system to perform the step of mapping into the image data symbols of the objects external to the taxiing aircraft at the locations, relative to the taxiing aircraft, indicated by the first data set. The one or more storage devices are encoded with instructions that, when executed by the one or more processors, cause the system also to perform the step of sending the image data to a display device for displaying the image data to a pilot of the taxiing aircraft.

The system of the preceding paragraph can optionally include, additionally and/or alternatively, any one or more of the following features, configurations and/or additional components:

A further embodiment of the foregoing system can further include a Global Positioning System (GPS) mounted to the taxiing aircraft. The one or more storage devices can be further encoded with instructions that, when executed by the one or more processors, cause the system to perform the step of collecting, from the GPS, a second data setindicative of a location and orientation of the taxiing aircraft. The one or more storage devices can be further encoded with instructions that, when executed by the one or more processors, cause the system to perform the step of mapping into the image data a symbol of the taxiing aircraft at the location and orientation indicated by the second data set.

A further embodiment of any of the foregoing systems, wherein the one or more storage devices can be further encoded with instructions that, when executed by the one or more processors, cause the system to perform the step of collecting a third data set indicative of a velocity and/or steering orientation of the taxiing aircraft.

A further embodiment of any of the foregoing systems wherein the one or more storage devices can be further encoded with instructions that, when executed by the one or more processors, cause the system to perform the step of calculating, based at least in part on the first and third data sets, a trajectory of the taxiing aircraft within the image data. The one or more storage devices can be further encoded with instructions that, when executed by the one or more processors, cause the system also to perform the step of mapping into the image data a symbol of the calculated trajectory of the taxiing aircraft.

A further embodiment of any of the foregoing systems, wherein the one or more storage devices can be further encoded with instructions that, when executed by the one or more processors, cause the system to perform the step of determining if the locations of the objects external to the taxiing aircraft are within the calculated trajectory of the taxiing aircraft.

A further embodiment of any of the foregoing systems, wherein the one or more storage devices can be further encoded with instructions that, when executed by the one or more processors, cause the system to perform the step of providing annotation of ranges of the objects external to the taxiing aircraft with respect to the location of the taxiing aircraft.

A further embodiment of any of the foregoing systems, wherein the one or more storage devices can be further encoded with instructions that, when executed by the one or more processors, cause the system to perform the step of providing annotation of time to collision with the objects external to the taxiing aircraft.

A further embodiment of any of the foregoing systems, wherein the one or more storage devices can be further encoded with instructions that, when executed by the one or more processors, cause the system to perform the step of collecting Automatic Dependent Surveillance Broadcast (ADS-B) data from ADS-B equipped objects external to the taxiing aircraft, the ADS-B data being indicative of locations of the ADS-B equipped objects external to the taxiing aircraft. The one or more storage devices are further encoded with instructions that, when executed by the one or more processors, cause the system to perform the step of mapping into the rendered image data symbols of the ADS-B equipped objects externa to the taxiing aircraft at the locations indicated by the collected ADS-B data.

A further embodiment of any of the foregoing systems, wherein the one or more storage devices can be further encoded with instructions that, when executed by the one or more processors, cause the system to perform the step of retrieving a destination location for the taxiing aircraft. The one or more storage devices can be further encoded with instructions that, when executed by the one or more processors, cause the system to perform the step of calculating a route from the location of the taxiing aircraft as indicated by the second data set to the destination location of the taxiing aircraft, the calculated route avoiding collision with the objects external to the taxiing aircraft. The one or more storage devices can be further encoded with instructions that, when executed by the one or more processors, cause the system also to perform the step of mapping into the image data at least a portion of the calculated route.

A further embodiment of any of the foregoing systems can further include an object detection system mounted to the taxiing aircraft. Collecting the first data set indicative of a location and orientation of the taxiing aircraft can include retrieving, from the object detection system, the first data set indicative of locations, relative to the taxiing aircraft, of the objects external to the taxiing aircraft.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method for displaying an image of a taxiing aircraft in relation to objects in a surrounding environment, the method comprising:
collecting a first data set indicative of locations, relative to the taxiing aircraft, of objects external to the taxiing aircraft;
forming image data of a map of an area external to and including the taxiing aircraft;
mapping into the image data symbols of the objects external to the aircraft at the locations, relative to the taxiing aircraft, indicated by the first data set; and sending the image data to a display device for displaying the image data to a pilot of the taxiing aircraft.

2. The method of claim 1, further comprising:
collecting a second data set indicative of a location and orientation of the taxiing aircraft; and
mapping into the image data a symbol of the taxiing aircraft at the location and orientation indicated by the second data set.

3. The method of claim 2, comprising:
retrieving a destination location for the taxiing aircraft;
calculating a route from the location of the taxiing aircraft as indicated by the second data set to the destination location of the taxiing aircraft, the calculated route avoiding collision with the objects external to the taxiing aircraft; and
mapping into the image data at least a portion of the calculated route.

4. The method of claim 1, 2 or 3, further comprising:
collecting a third data set indicative of a velocity and/or steering orientation of the taxiing aircraft; and
calculating, based at least in part on the first and third data sets, a trajectory of the taxiing aircraft within the image data; and
mapping into the image data a symbol indicative of the calculated trajectory of the taxiing aircraft.

5. The method of claim 4, further comprising:
determining if the locations of the objects external to the taxiing aircraft are within the calculated trajectory of the taxiing aircraft.

6. The method of any preceding claim, further comprising:
providing annotation of ranges of the objects external to the taxiing aircraft with respect to the location of the taxiing aircraft.

7. The method of any preceding claim, further comprising:
providing annotation of time to collision with the objects external to the taxiing aircraft .

8. The method of any preceding claim, further comprising:
collecting Automatic Dependent Surveillance Broadcast (ADS-B) data from ADS-B equipped objects external to the taxiing aircraft, the ADS-B data being indicative of locations of the ADS-B equipped objects external to the taxiing aircraft; and
mapping into the image data symbols of the ADS-B equipped objects external to the taxiing aircraft at the locations indicated by the collected ADS-B data.

9. The method of any preceding claim, wherein collecting the first data set indicative of the locations, relative to the taxiing aircraft, of objects external to the taxiing aircraft comprises:
retrieving the first data set from an object detection system mounted to the taxiing aircraft.

10. A system for displaying an image of a taxiing aircraft in relation to objects in a surrounding environment, the system comprising:
one or more processors; and
one or more storage devices encoded with instructions that, when executed by the one or more processors, cause the system to perform the steps of:
collecting a first data set indicative of locations, relative to the taxiing aircraft, of objects external to the taxiing aircraft;
forming image data of a map of an area external to and including the taxiing aircraft;
mapping into the image data symbols of the objects external to the taxiing aircraft at the locations, relative to the taxiing aircraft, indicated by the first data set; and
sending the image data to a display device for displaying the image data to a pilot of the taxiing aircraft.

11. The system of claim 10, further comprising:
a Global Positioning System (GPS) mounted to the taxiing aircraft,
wherein the one or more storage devices are further encoded with instructions that, when executed by the one or more processors, cause the system to perform the steps of:
collecting, from the GPS, a second data setindicative of a location and orientation of the taxiing aircraft; and
mapping into the image data a symbol of the taxiing aircraft at the location and orientation indicated by the second data set.

12. The system of claim 10 or 11, wherein the one or more storage devices are further encoded with instructions that, when executed by the one or more processors, cause the system to perform the steps of:
collecting a third data set indicative of a velocity and/or steering orientation of the taxiing aircraft.

13. The system of claim 12, wherein the one or more storage devices are further encoded with instructions that, when executed by the one or more processors, cause the system to perform the steps of:
calculating, based at least in part on the first and third data sets, a trajectory of the taxiing aircraft within the image data; and
mapping into the image data a symbol of the calculated trajectory of the taxiing aircraft.

14. The system of claim 13, wherein the one or more storage devices are further encoded with instructions that, when executed by the one or more processors, cause the system to perform the steps of:
determining if the locations of the objects external to the taxiing aircraft are within the calculated trajectory of the taxiing aircraft.

15. The system of any one of claims 10-14, wherein the one or more storage devices are further encoded with instructions that, when executed by the one or more processors, cause the system to perform the steps of:
providing annotation of ranges of the objects external to the taxiing aircraft with respect to the location of the taxiing aircraft.
